Europäisches Patentamt

**European Patent Office**

**Office européen des brevets**

(11) Publication number: **0 178 423**

**A2**

## EUROPEAN PATENT APPLICATION

(21) Application number: **85110447.1**

(22) Date of filing: **20.08.85**

(51) Int. Cl.⁴: **G 11 B 13/04**
**G 11 B 11/10**

(30) Priority: **14.09.84 JP 191548/84**

(43) Date of publication of application:
**23.04.86 Bulletin 86/17**

(84) Designated Contracting States:
**DE FR GB NL**

(71) Applicant: **HITACHI, LTD.**
**6, Kanda Surugadai 4-chome Chiyoda-ku**
**Tokyo 100(JP)**

(72) Inventor: **Kato, Tsuyoshi**
**48-18, Akatsukicho-1-chome**
**Hachioji-shi(JP)**

(72) Inventor: **Ojima, Masahiro**
**14-26, Shakujiimachi-1-chome Nerima-ku**
**Tokyo(JP)**

(72) Inventor: **Saito, Atsushi**
**11-12, Kandori-2-chome**
**Ichikawa-shi(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Magneto-optical recording medium.**

(57) A double-sided magneto-optical recording disk (10) consists of two pieces of recording medium each made up of a transparent substrate (1, 1') covered on its one side with a perpendicular magnetic film (3, 3') magnetized in a certain direction, both mediums being bonded with their magnetic films facing each other so that the films have magnetization directions opposing each other. Each side of the recording disk is recorded, reproduced or erased in the same operating procedure by projecting a laser beam (41) through the transparent substrate to the magnetic film.

FIG. 5

MAGNETO-OPTICAL RECORDING MEDIUM

1 BACKGROUND OF THE INVENTION

The present invention relates to an erasable magneto-optical recording medium and, particularly, to a double-sided, erasable magneto-optical recording medium.

The magneto-optical recording medium employs a perpendicular magnetic thin film as a recording film, on which information is recorded or erased through the irradiation of a laser beam so as to eliminate selectively the magnetization of arbitrary fine area by heating and through the application of an external magnetic field to that area so as to set the magnetization in a certain direction depending on the recording signal, as generally called "thermo-magnetic effect", and recorded information is retrieved by utilization of a magneto-optical effect (e.g., Kerr effect or Faraday effect) in which the polarization plane for the incident light rotates depending on the magnetization direction of the magnetic film.  The external magnetic field needs to be applied in opposite directions for the cases of recording and erasing information.

Information retrieval on the recording medium using the Kerr effect allows double-sided recording. For example, Japanese Patent Unexamined Publication No. 57-24046 discloses a reflective recording medium which is provided with magnetic films on both sides of a base so that the magnetic films on both sides have the same magnetization direction. Although the disclosed reflective magneto-optical recording medium has the advantage of single magnetizing process, it needs recording/erasing magnetic fields in opposite directions for one side and another. On this account the recording system needs to check the side of the recording medium and to reverse the magnet for recording another side, and in reproduction the system needs to deal with reproduced signals having opposite binary levels depending on the side of the recording medium, resulting in a complex recorder mechanism and signal processing circuitry.

The magnetic film used for the magneto-optical recording medium is made of rare-earth elements (Gd, Tb, etc.) and transition metals (Fe, Co, etc.) that are extremely susceptible to oxidation and therefore need be isolated from the atmosphere. In addition, a laser beam is used for recording, reproducing or erasing the magneto-optical recording medium, and the recording film must be clear of dusts and dirt. The magneto-optical recording medium in the above-mentioned patent application is merely the formation of magnetic films on both sides of a base material, and protection against oxidation and dust contamination is not considered at all. It also describes a magneto-optical recording medium fabricated in such a way of separately magnetizing two base plates each provided with a magnetic film on

- 3 -

**0178423**

one side and thereafter joining both base plates so that the magnetic films on both sides have magnetism in opposite directions.  However, also in this case nothing is considered for the influence of oxidation and dusts.

In order for these magneto-optical recording mediums to be free from oxidation and the influence of dusts, the magnetic film must be coated with a protection layer, and it can be as thick as 200 μm and must be made of a transparent anti-humidity material.  Such a thick recording medium results in an increased distance between the magnetic film and the recording/erasing magnet, and the use of a larger magnet to offset the increased magnetic gap will result in a degraded mechanical response.

SUMMARY OF THE INVENTION

It is an object of this invention to provide a double-sided magneto-optical recording medium which is protected from oxidation of the magnetic film and against the presence of dirt and dusts, and capable of recording, reproduction and erasure on both sides in a single operating procedure.

The inventive magneto-optical recording medium features that two transparent substrates provided on one side thereof with a perpendicular magnetic film magnetized in a certain direction in advance are bonded with their magnetic films facing each other to have opposite magnetization directions, so that both recording films are recorded, reproduced or erased in the same method by projecting a laser beam through the transparent base substrate to the perpendicular magnetic film. Each of the transparent substrates is on the outer side of the double sided recording medium. The magnetic film is embedded between the transparent substrates, whereby it is protected from oxidation, and it is also protected against dusts through the irradiation of laser beam for recording, reproduction and erasure through the transparent substrate. Since the transparent base substrate also functions as a protective layer, the total thickness of the recording medium can be made small, allowing a decreased strength of the external magnetic field necessary for recording and erasure, and thus an enhanced response of movement by use of a smaller external magnetic source.

Another feature of the inventive magneto-optical recording medium is that the perpendicular magnetic film is provided on at least one surface farther from the base substrate with a protection film made of a high anti-humidity material. The purpose of this protection film is to enhance the protective effect against oxidation, and it need not be a thick film.

A further feature of the inventive magneto-optical recording medium is that header information is formed so that information can be processed in units of track or sector. The header information is formed in pits (phase structure). Namely, header information such as the track number, sector number and synchronizing signal is formed in advance in concave or convex pits of variable length or constant dimension on one side of the base substrate, on which the magnetic film is formed thereafter. When the concave or convex pit is irradiated by the laser beam, it produces a diffracted reflection beam with a different phase than the reflection beam caused by the irradiation of the laser beam on a flat portion around the pit, and the header information can be read by detecting the variation in the intensity of diffracted reflection beam.

The inventive magneto-optical recording medium is provided with the formation of spiral or concentric guide grooves for the optical guidance of the laser beam along the track. The above-mentioned header information is provided intermittently in the flat portion between guide grooves, and user's data is recorded on the perpendicular magnetic thin film at the position between guide grooves using the thermo-magnetic effect. In the magneto-optical recording medium, information is retrieved by detecting a small (less than 1 degree) rotation of polarization plane by utilization of the Kerr effect, and from the viewpoint of upgraded S/N property it is desirable for the recording medium to have the advanced formation of header information in the flat portion between guide grooves and the record of data in the flat portion between guide grooves. The surface of the perpendicular magnetic film on the guide groove is rougher than the flat portion between guide grooves, causing a higher surface noise level.

Conceivably, this is caused by the fluctuation of the laser intensity in cutting grooves and the fluctuation in photoresist development during the fabrication of the master disc. By recording information between guide grooves, the surface noise level can be lowered, whereby the S/N ratio of the retrieved information signal can be improved.

BRIEF DESCRIPTION OF THE DRAWING

Fig. 1 is a plan view of the magneto-optical recording disk embodying the present invention;

Fig. 2 is a cross-sectional view taken along the line II-II' of Fig. 1;

Fig. 3 is a perspective view showing in part the perpendicular magnetic film;

Fig. 4 is an illustration used to explain the method of initial magnetization for the inventive magneto-optical recording disk; and

Fig. 5 is an illustration used to explain the recording, reproducing and erasing operation for the inventive magneto-optical recording disk.

DESCRIPTION OF THE PREFERRED EMBODIMENTS

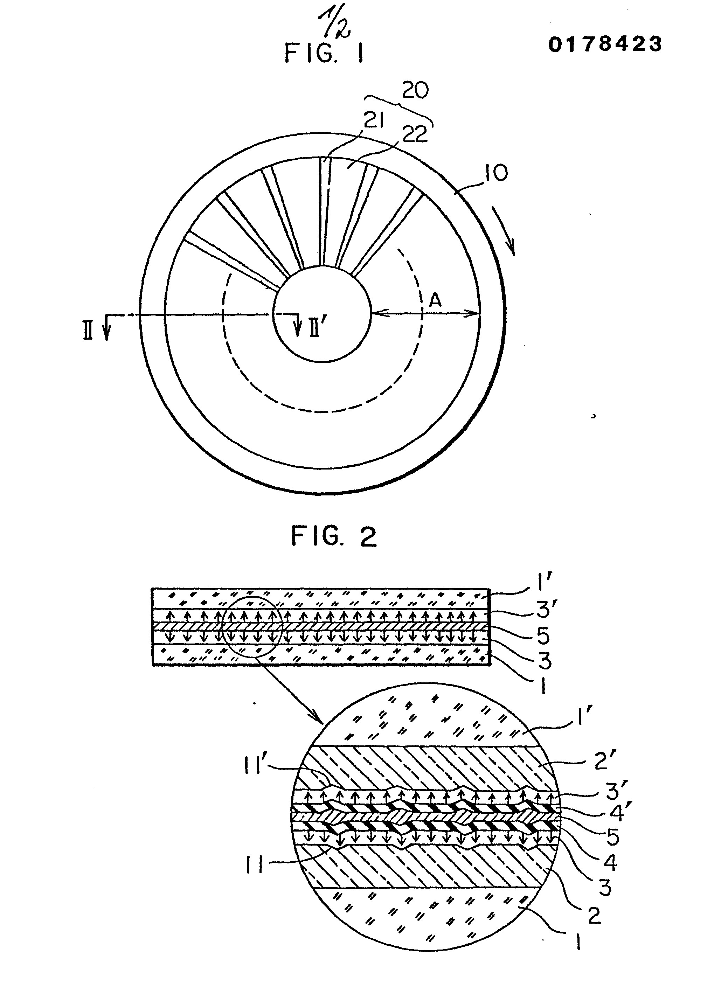

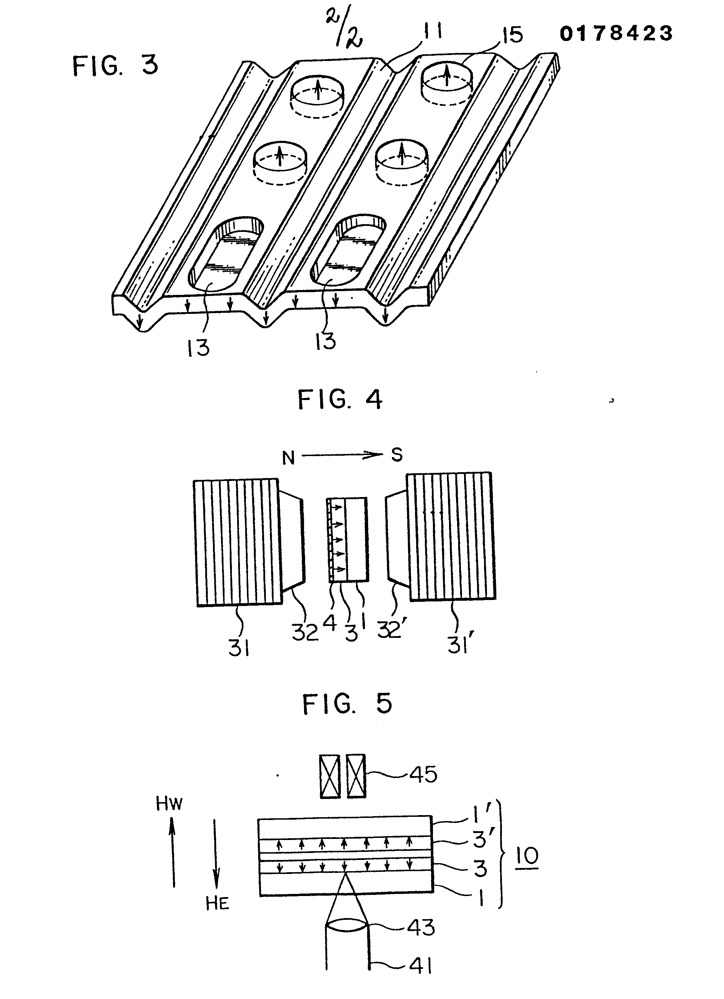

In Fig. 1, the inventive magneto-optical recording disk has a recording area as indicated by A in its radial direction, in which are formed in advance a number of spiral or concentric guide grooves 11 (shown in Fig. 3) at a constant pitch, e.g., 1.6 μm. Each

circle of the groove, i.e., track, is segmented into a number of small areas called sectors 20, e.g., 64 sectors, and each sector is the minimum unit area in writing, reading or erasing information on the disk. Each sector consists of a header section 21 for storing sector control data such as the sector number, track number and synchronizing signal, and a data section 22 for storing user's data. The header section 21 is a string of concave or convex pits (13 shown in Fig. 3) formed during the manufacturing process, while the data section is written by the user using the thermo-magnetic effect.

In Fig. 2 showing the radial cross-section of the magneto-optical recording disk, reference numbers 3 and 3' denote perpendicular magnetic films mainly made of, for example, Tb-Fe with a thickness of about 1000 $\overset{o}{A}$. In this embodiment, material $Tb_{22}Fe_{73}Co_5$ is used. The perpendicular magnetic films 3 and 3' are formed on one side of substrate disks 1 and 1', respectively, through the sputtering or evaporation process. The substrate disks 1 and 1' are made of transparent glass or plastic material with a thickness of about 1 mm. Provided between the substrate 1 and magnetic film 3 (and between 1' and 3') is a layer 2 (2') of ultraviolet-ray cured resin used to form guide grooves 11 and 11' of phase structure and header pits in the magnetic film 3 (3').

In fabrication, a laser beam is used to precisely cut guide grooves and header pits on the surface of an original (or mother) disk plate with photoresist applied thereon. The grooves and pits are transferred to a Ni stamper, and they are further transferred from the stamper to the ultraviolet-ray cured resin layer 2 on the substrate, so that a transparent substrate 1 with the guide grooves 11 and header pits 13 formed therein is produced. The same stamper is used to produce another substrate 1' having the ultraviolet-ray cured resin layer 2' on which the guide grooves 11' and header pits 13' are formed. If the formation of guide grooves 11 and 11' and header pits 13 and 13' of the phase structure is not necessary, the ultraviolet-ray cured resin layers 2 and 2' are not needed.

Fig. 3 shows part of the complete perpendicular magnetic film 3 (3'). Each of the guide grooves 11 and 11' has a triangular cross-section, and its depth is about 1/8 of the laser wavelength used for the recording and reproducing operations. The term "depth" here signifies the optical depth that is the product of the physical depth and the refraction index of the transparent substrate. For example, using the laser beam with a wavelength of 830 nm, the optical depth of the guide groove is about 0.1 μm, and the actual groove depth for a transparent substrate having a refraction index of 1.5 is about 0.07 μm. The guide groove has a width of about 0.5 μm.

The header information including the track number and sector number is recorded fixedly as a string of pits 13 with variable length or constant dimension. Variable-length pits represent address information by being pulse-width modulated, while uniformly sized pits represent coded address information. The pit 13 has the optical depth equal to about a quarter of the laser wavelength used in the recording and reproducing operations. For example, for the laser wavelength of 830 nm, the pit has an optical depth of about 0.2 μm and a width of about 0.8 μm. The pit string storing the header information is preferably formed in a flat portion between guide grooves as shown in Fig. 3.

In Fig. 2, the perpendicular magnetic film 3 (3') formed on the substrate 1 (1') is overlaid by a protection film 4 (4') made of a humidity-resistive material. In this embodiment, a $SiO_2$ film is formed in thickness of about 700 $\overset{\circ}{A}$. Besides $SiO_2$, dielectric material such as SiO, $Al_2O_3$ and AlN may suitably be used as the protection film 4. Another protection film of a like material may be provided between the transparent substrate and the perpendicular magnetic film, and it is preferable to provide a protection film on both sides of the magnetic film for the purpose of protecting the magnetic film from oxidation. The unti-oxidation film need not be a thick one, and provision of the protection film on both sides of the magnetic film does not significantly effect the overall thickness of the recording disk.

0178423

The applicant of this invention has proposed a single-sided magneto-optical recording medium consisting of a perpendicular magnetic film with guide grooves and header pits formed therein on one side of a transparent substrate, as disclosed in Japanese Patent Application No. 59-133,156 filed on June 29, 1984 (U.S. Patent Serial No. 685,123 filed on December 21, 1984). In the present invention, two pieces of recording medium having the structure as described in the above-mentioned patent application are processed to have initial magnetization for each magnetic film in the direction perpendicular to the base plane and, thereafter, both parts are bonded with their magnetic films facing each other in opposite orientation of magnetization. For the adhesive 5 shown in Fig. 2, an epoxy theremosetting adhesive hardening at a temperature in the range 20°-50°C may preferably be used.

Fig. 4 illustrates the initial magnetization process for the magneto-optical recording medium according to this invention. The magnetizing system employs an electromagnet made up of windings 31 and 31' and cores 32 and 32', and it produces the magnetic field with a strength of around 10 kOe in the direction determined by the excitation current direction. In the figure, the magnetic field is set up uniformly as shown, and a recording disk with the magnetic film 3 and protection film 4 formed on one side of the substrate 1 is placed in the magnetic field so that it is magnetized perpendicularly to the disk plane. The same process takes place for another recording disk made up of the substrate 1', magnetic film 3' and protection film 4'. Thereafter, both members are joined using the adhesive 5, and the magneto-optical recording disk shown in Fig. 2 is completed.

Fig. 5 illustrates the information recording or erasing operation for the complete recording disk. A collimated laser beam 41 is focused by a convergence focussing lens 43 through the substrate 1 on to the magnetic film 3 to form a fine spot with a diameter of about 1.8 μm. The spot diameter is defined to be the diameter of the intensity distribution having a magnitude $1/e^2$ the maximum intensity. At the same time a recording/erasure winding 45 is energized to produce a writing magnetic field $H_W$ or erasing magnetic field $H_E$ so that the fine area on the magnetic film 3 irradiated by the laser beam 41 has its magnetization direction controlled in accordance with the recording or erasing signal.

Fig. 3 illustrates magnetic domains 15 created in the data section 22 of a track. Each magnetic domain 15 is created in such a way of projecting a laser beam on to a certain portion of the magnetic film 3 so that the definite portion loses magnetims due to heating, and subsequently the writing magnetic field $H_W$ is applied to that portion in a magnetizing direction opposite to that of the peripheral portion, whereby a

0178423

bit of information is recorded as an oppositely magneized area. For erasing the recorded information, the erasing magnetic field $H_E$ opposite in direction to the writing magnetic field $H_W$ is applied so that the magnetization direction is reversed back to the original direction.

As shown in Fig. 3, magnetic domains 15 are created in flat portions between contiguous guide grooves. Since the flat portion has a lower surface noise level as compared with the surface of the guide groove, information can be retrieved with an enhanced S/N property. Although it is not shown in the figure, the recording or erasing operation from the side of substrate 1' can take place by application of the writing magnetic field $H_W$ or erasing magnetic field $H_E$ of the same direction as of the operation from the side of substrate 1.

Information recorded magnetically on the perpendicular magnetic film is retrieved by utilization of the Kerr effect in which the incident light has its polarizing direction slightly rotated in either direction depending on the magnetization direction of the perpendicular magnetic film. An example of the information retreival system includes an analizer placed on the path of the reflection light from the recording medium so that the rotation of the polarizing plane due to the Kerr effect is converted into the variation of intensity, which is further converted into an electrical signal using an opto-electric transducer. Header information,

- 13 -                                0178423

which is recorded as a string of pits, can be retrieved directly by sensing the variation of reflection light intensity using the opto-electric transducer. The tracking signal is detected by utilizing the diffraction of light caused by the guide groove 11. Namely, the intensity distribution of a light spot ranges to the adjacent tracks, causing the reflection light from the recording medium to create an interference pattern for the 0th-order and 1st-order diffraction in the guide grooves. The interference pattern is symmetric with respect to the guide groove when no tracking error exists, whereas the symmetry of the interference pattern is collapsed by the occurrence of a tracking error, and therefore a tracking signal can be produced as a differential output of a split photosensor placed on the reflection light path. The split photosensor can be used commonly for detecting the header information through the arrangement of providing an adding output. The detection system may be one in which a beam splitter is placed on the reflection light path from the recording medium so that the reflection beam is split into two, one for detecting recorded information, the other for detecting the header information and tracking signal. Such a signal detection system is identical to the case of a single-sided magneto-optical recording medium as described in the above-mentioned Japanese Patent Application No. 59-133156 (U.S. Patent Serial No. 685,123).

- 1 -                    0178423

CLAIMS:

1.      A magneto-optical recording medium (10) comprising two pieces of recording medium each made up of
a transparent substrate (1, 1') covered on one side
thereof with a perpendicular magnetic film (3, 3')
magnetized in a predetermined direction, said two pieces
of recording medium being bonded together with an adhesive
(5) with their perpendicular magnetic films facing each
other so that said films have magnetization directions
opposing each other.

2.      A recording medium according to claim 1,
wherein said perpendicular magnetic film (3, 3') is
provided on at least one surface thereof farther from
said substrate (1, 1') with a protection film (2, 2').

3.      A recording medium according to claim 2,
wherein said protection film comprises a dielectric
material film.

4.      A recording medium according to claim 1,
wherein said recording medium has a formation of guide
grooves (11, 11') which provide an optical guidance for
a laser beam in recording, retrieving or erasing information on said medium, each of said guide grooves being
divided into a plurality of sectors (20, 21) each consisting of a header section in which are formed in
advance a series of pits (13) in a phase structure storing
header information including at least the identification
of said sector and a data section which follows said
header section, said data section of said perpendicular magnetic film being written information through a process of reversing the magnetization direction of said film.

5.    A recording medium according to claim 4, wherein said series of pits (13) is formed in a flat portion between adjacent ones of said guide grooves.

6.    A recording medium according to claim 1, wherein said adhesive (5) comprises a thermosetting adhesive.

B 85

0178423

# FIG. I

# FIG. 2

FIG. 3

FIG. 4

FIG. 5